# EUROPÄISCHE PATENTSCHRIFT

(11) **EP 1 996 884 B1**
(45) Veröffentlichungstag und Bekanntmachung des Hinweises auf die Patenterteilung: **04.01.2012**
(21) Anmeldenummer: 07726941.3
(22) Anmeldetag: 15.03.2007
(51) Int. Cl.: F27B 7/20, C04B 7/43

(54) **BEHÄLTER-KALZINATOR UND DESSEN VERWENDUNG**
CONTAINER-CALCINATOR AND USE THEREOF
CALCINATEUR À RÉSERVOIR ET SON UTILISATION

(30) Priorität: 15.03.2006 DE 102006012267
(43) Veröffentlichungstag der Anmeldung: 03.12.2008
(73) Patentinhaber: Cement and Mining Processing (CMP) AG, 06846 Dessau (DE)
(72) Erfinder: KROHN, Reiner, 06844 Dessau (DE); SCHUSTER, Frank, 06847 Dessau (DE); TEICHLER, Ingo, 06766 Wolfen (DE)
(74) Vertreter: Gritschneder, Martin
(86) Internationale Anmeldenummer: PCT/EP2007/052453
(87) Internationale Veröffentlichungsnummer: WO 2007/104787

(56) Entgegenhaltungen:
- EP-A- 1 004 553
- EP-A1- 0 754 924
- DE-A1- 2 324 565
- DE-A1- 3 417 148
- DE-A1- 3 520 058
- DE-A1- 10 358 317

## Beschreibung

Die Erfindung betrifft einen Behälter-Käzinator- zum Vorkalzinieren von Rohmehl bei der Herstellung von Zementklinker. Der Behälter-Kalzinator ist ein Behälter, in den unten die Abgasleitung eines Drehofens mündet und von dem oben die Kalzinator-Abgasleitung wegführt. Es sind Einrichtungen für die Zuführung von Rohmehl, Brennstoff und Tertiärluft vorgesehen. Durch den Kalzinator wird als Gasphase gleichzeitig Ofenabgas und Kühlerheißluft (= Tertiärluft) hindurch gesaugt. Als Feststoffphase wird heißes Rohmehl zugeführt. Dazu kommt fester, flüssiger und/oder gasförmiger Brennstoff. Die Erfindung betrifft ferner die Verwendung des Kalzinators.

Bei der Herstellung von Zementklinker wird Rohmehl vorgewärmt, restgetrocknet, kalziniert, zu Klinker gebrannt und dann gekühlt. Nach diesem Trockenverfahren arbeitende Anlagen bestehen aus Zyklonvorwärmer, Kalzinator, Tertiärluftleitung, Drehofen und Klinkerkühler. Die Energiezuführung für die Stoffumwandlung in dieser Anlage erfolgt durch Brennstoffzuführung in den Drehofen und in den Kalzinator. Die im Klinkerkühler erhitzte Luft wird zum Teil als so genannte Sekundärluft dem Drehofen und zum Teil als so genannte Tertiärluft dem Kalzinator zugeführt. Die Abgase des Drehofens werden durch eine Ofeneinlaufkammer und eine darüber befindliche Strömungseinschnürung, der so genannten Gutsperre, zum Kalzinator geführt, durchströmen diesen und werden zusammen mit den im Kalzinator erzeugten Abgasen, bestehend aus Rauchgas des Kalzinator-Brennstoffes und CO ₂, in den Zyklonvorwärmer abgeführt.

Der Zyklonvorwärmer besteht aus einem oder mehreren Strängen und jeder Strang aus mehreren Zyklonstufen, die jeweils als Schwebegaswärmetauscher fungieren. Das trockene Zementrohmehl wird dem Steigrohr der obersten Zyklonstufe aufgegeben, durchwandert von oben nach unten die Zyklonstufen und wird aus der vorletzten (zweituntersten) Zyklonstufe in den Kalzinator geleitet. Im Kalzinator wird das heiße Rohmehl nahezu völlig entsäuert und strömt mit dem Kalzinator-Abgas in die unterste Zyklonstufe, wird dort abgeschieden, der Ofeneinlaufkammer aufgegeben und gelangt durch diese als Heißmehl in den Drehofen. Das Heißmehl wird im Drehofen restentsäuert und durch den Sinterungsprozess zu Klinker gebrannt.

In der Verbrennungsluft ist ein bestimmter Anteil Stickstoff enthalten, der zwar abhängig von der relativen Luftfeuchtigkeit ist, aber ansonsten relativ gleichmäßig ist. Der in Brennstoffen enthaltene Stickstoff kann dagegen sehr schwanken. Bei der Verbrennung führt der aus beiden Quellen stanmende Stickstoff zur Bildung von NOx, wobei hohe Temperaturen und Sauerstoff-Überschuss die Bildung von NOx begünstigen. Die für die Klinkerproduktion erforderliche Brennstoff-Wännemenge wird zu etwa 40% im Drehofen und zu etwa 60% im Kalzinator eingesetzt. Der Klinkerbrand im Drehofen erfolgt bei Temperaturen von 1450 bis 1500°C die Temperaturen im Kalzinator liegen nur bei ca. 900°C. Dadurch entsteht im Drehofen Hochtemperatur-NOx und Brennstoff-NOx, während im Kalzinator nur Brennstoff-NOx gebildet wird.

### Stand der Technik

Aus EP-A-1 004 553 und EP-B-1167 314 ist es bekannt, das gebildete NOx durch eine unterstöchiometrische Verbrennung zu reduzieren. Der aus diesen Druckschriften bekannte Kalzinator ist ein so genannter Strömungs- oder Schwanenhals-Kalzinator und besteht im unteren Teil aus zwei Strömungskanälen, in denen jeweils eine unterstöchiometrische Verbrennung stattfindet, wobei die Verbrennung parallel erfolgt. Der eine Strömungskanal ist verbunden mit dem Drehofen, und der andere Strömungskanal mit der Tertiärluftzuleitung. Beide Strömungskanäle werden mit Brennstoff beschickt und erzeugen durch unterstöchiometrische Verbrennung einen CO-haltigen Gasstrom, so dass in beiden Strängen des Kalzinators zwei CO-haltige Gasstromsträhnen entstehen. Die gemeinsame Nachverbrennung dieser Gasströme erfolgt im gemeinsamen, oberen, ansteigenden Kalzinatorabschnitt, wobei diesem Kanal über eine Umgehungsleitung, welche von der Tertiärluftzuleitung abzweigt, Tertiärluft zugeführt wird. Durch diese Tertiärluftzuführung wird das entstandene CO-Gas nachverbrannt. Durch diese Art der Verbrennung und die Verbrennung in einer Rohmehlwolke entstehen Verbrennungstemperaturen unter 1000 °C, wodurch der NOx-Gehalt im Kalzinatorabgas sowie im Abgas der gesamten Zementklinkerproduktionslinie abgesenkt werden kann.

Aus DE 196 49 922 ein Rohr-Kalzinator bekannt, bei dem das Rohmehl, der Brennstoff und die Tertiärluft jeweils in zwei Chargen zugeführt werden. Die ersten und zweiten Chargen werden dabei jeweils etwa auf gleicher Höhe zugeführt.

Aus DE 103 58 317 ist eine Anlage zur thermischen Behandlung von Rohmaterial bekannt, bei dem die Vorkalzinationsstufe aus einer separaten Verbrennungszone sowie einer von den Abgasen des Sinterofens durchströmten Reaktionszone besteht. Die Tertiärluft wird aufgeteilt und zusammen mit dem Rohmaterial aufgegeben.

Aus DE 3 817 357 ist eine Vorrichtung zur Wärmebehandlung von feinkörnigem Gut bekannt, bei der die Vorkalzinationszone aus einer oberen Drallkammer und einer unteren Drallkammer besteht. In die obere Drallkammer wird Tertiärluft, Brennstoff und Gut zugeführt. Beide DrallKammern sind durch einen Diffusor verbunden, und im unteren Bereich des Diffusors befindet sich eine Brennstoffzuführung, sowie eine Gutzuführung. Auch hier wird die Tertiärtuft aufgeteilt und zusammen mit dem Gut aufgegeben.

### Darstellung der Erfindung

### Technische Aufgabe

Der Erfindung liegt die Aufgabe zugrunde, den NOx-Gehalt im Abgas einer Anlage zur Herstellung von Zementklinker weiter zu senken.

### Technische Lösung

Erfindungsgemäss wird diese Aufgabe mittels eines Behälter-Kalzinator gemäss Anspruch 1 und dessen Verwendung gemäss Anspruch 6 gelöst. Vorteilhafte Weiterbildungen sind in den Unteransprüchen enthalten.

### Vorteilhafte Wirkungen

Jede Tertiärluftmenge kann durch eine oder mehrere Anschlussöffnungen in den Kalzinator strömen. Vorzugsweise strömt sie durch mindestens zwei Anschlussöffnungen in den Kalzinator.

Der Kalzinator ist somit ein Behälter- bzw. Kompakt-Kalzinator. Der Brennstoff wird also in zwei Chargen zugegeben, die zuerst hintereinander unterstöchiometrisch verbrannt werden, und danach im gleichen Behälter gemeinsam vollständig verbrannt werden. Die Tertiärluftzufuhr erfolgt durch eine geteilte Rohrleitung an zwei Stellen des Behälter- bzw. Kompakt-Kalzinators.

Durch das relativ niedrige Temperaturniveau gelingt es bei dem erfindungsgemäßen Kompakt-Kalzinator insbesondere die Bildung von Hochtemperatur-NOx zu reduzieren.

Die Verminderung des NOx-Gehalts im Abgas ist besonders ausgeprägt, wenn der Kalzinator als Mischgas-Kalzinator eingesetzt wird. Vorzugsweise wird der Kalzinator ferner einsträngig ausgeführt. Der Behälter- bzw. Kompaktkalzinator wird so mit Ofenabgas, Brennstoff, Rohmehl und Tertiärluft beschickt, dass drei Reaktionszonen entstehen, eine untere, eine mittlere und eine obere Reaktionszone. Die drei Reaktionszonen haben etwa die gleiche vertikale Erstreckung. Das vorerhitzte Rohmehl, die Tertiärluft und der Brennstoff werden jeweils in mindestens zwei Teilen an mindestens zwei Stellen unterschiedlicher Höhe zugeführt.

In der unteren Reaktionszone werden der erste Teil des Kalzinator-Brennstoffes und der erste Teil des Rohmehls aufgegeben. Der Brennstoff wird mit Hilfe des Sauerstoffes des Ofenabgases unterstöchiometrisch verbrannt. Das Rohmehl wird teilkalziniert. Das Abgas der unteren Reaktionszone strömt dann nach oben in die mittlere Reaktionszone, wo der zweite Teil des Brennstoffes, der zweite Teil des Rohmehls und der erste Teil der Tertiärluft zugegeben werden. Dieser Teil der Tertiärluft ist so bemessen, dass der zweite Teil des Brennstoffes wiederum unterstöchiometrisch verbrennt. Im mittleren Reaktionsbereich erfolgt eine weitere Teilkalzinierung des Rohmehls. Vorzugsweise wird der zweite Teil des Rohmehls dem ersten Teil der Tertiärluft aufgegeben, bevor diese in den Behälter eintritt.

Alle Gase und Feststoffe der mittleren Reaktionszone strömen nach oben in die obere Reaktionszone des Kalzinators. Hinzu kommt der zweite Teil der Tertiärluft. Dieser sorgt für die restliche überstöchiometrische Verbrennung der unverbrannten oder teilverbrannten Stoffe. Da alle Verbrennungsprozesse im Kalzinator bei relativ niedrigen Temperaturen ablaufen, entstehen Abgase mit reduziertem NOx-Gehalt.

Vorzugsweise erweitert sich der Behälter ausgehend von der Gutsperre, die sich zwischen der Ofeneinlaufkammer und dem Kalzinator befindet, in einem ersten Teil von unten nach oben unter einem spitzen Winkel konisch, besteht anschließend aus einem zylindrischen, zweiten Teil und verjüngt sich oben wieder in einem dritten Teil unter einem stumpfen Winkel zur Abgasleitung hin, die in den oder die Zyklone der untersten Stufe mündet.

Der spitze Winkel des ersten Teils kann zunächst etwas weniger als 45° betragen und sich dann auf etwa 20 bis 30° verringern. Der erste Teil kann etwa die drei- bis fünffache vertikale Erstreckung wie der zweite, zylindrische Teil haben, der wiederum etwa die gleiche vertikale Erstreckung wie der dritte, stumpfwinkelige Teil hat.

Die untere Reaktionszone nimmt etwa das untere bis mittlere Drittel des unteren Teils ein, die mittlere Reaktionszone das obere Drittel und die obere Reaktionszone den zweiten, zylindrischen und den dritten, kegelstumpfförmigen Teil des Kalzinators.

Zur stärkeren Trennung der Reaktionszonen im Kalzinator kann dieser mit einer oder mehreren Einengungen ausgestattet sein. Insbesondere zwischen der mittleren und der oberen Reaktionszone kann eine Einengung vorgesehen werden.

Das Länge/Durchmesser-Verhältnis des Behälter-Kalzinators beträgt etwa 2:1.

Der erfindungsgemäße Behälter-Kalzinator kann auch in Verbindung mit einem Rohr-Kalzinator eingesetzt werden, um die Verweilzeit im Kalzinatorsystem zu erhöhen. Dies kann insbesondere beim Einsatz von trägen Brennstoffen, z.B. Ersatzbrennstoffen, vorteilhaft sein. Das Länge/Durchmesser-Verhältnis des Behälter-Kolzinators liegt dann vorzugsweise zwischen etwa 3:1 und etwa 4:1.

Die Aufgabe der festen, flüssigen und/oder gasförmigen Brennstoffe kann durch Brennerrohre mit den für den jeweiligen Brennstoff üblichen Einbauten erfolgen. Das heiße Rohmehl wird mittels Aufgabekästen direkt in den Kalzinator aufgegeben. Die Tertiärluft als Verbrennungsluft für den Kalzinatorbrenner wird durch einen einfachen nach unten oder oben gerichteten und/oder tangential angeordneten Anschluss der Tertiärluftleitung an den Kalzinator diesem zugeführt.

Die durch die Erfindung erzielbaren Vorteile bestehen ferner in der kompakten Bauweise des Kalzinators.

Der erfindungsgemäße Kalzinator kann insbesondere in dem Verfahren eingesetzt werden, das in der gleichzeitig eingereichten Internationalen Patentanmeldung "Herstellung von Zementklinker" (WO 2007104785 A), (DE 10 2006 012 301 A1) beschrieben ist. Bei diesem Verfahren wird zur Herstellung von Zementklinker im Trockenverfahren der Rohstoff in einer Rohmühle zu Zementrohmehl gemahlen, wird das Rohmehl in einem Rohmehlvorwärmer vorgewärmt und in einem Kalzinator vorkalziniert, wird das Heißmehl in einem Drehofen restkalziniert und zu Zementklinker gebrannt und wird der Zementklinker in einem Rostkühler gekühlt, wobei die Abgase des Drehofens dem Kalzinator zugeführt werden und dem Drehofen mittels eines Primärluftventilators Primärluft zugeführt wird. Die Anlage ist in einem Verbündbetrieb mit Rohmehlmahlung und in einem Direktbetrieb ohne Rohmehlmahlung betreibbar, wobei im Verbundbetrieb der Drehofen, der Rohmehlvorwärmer und die Rohmühle im Gasverbund arbeiten, indem das Heißgas des Rohmehlvorwärmers der Rohmühle zugeführt wird und danach als Abgas durch einen Abgasschornstein ins Freie abgegeben wird, und wobei im Direktbetrieb das Heißgas des Rohmehlvorwärmers an der Rohmühle vorbei zum Abgasschomstein geleitet wird. Im Verbundbetrieb wird ein Teil des Abgases dem Drehofen als Primäuluft zugeführt, und im Direktbetrieb wird ein Teil des Abgases zusammen mit Frischluft dem Drehofen als Primärluft zugeführt.

### Kurze Beschreibung der Zeichnungen

Ausführungsbeispiele der Erfindung werden nachfolgend anhand der Zeichnung näher erläutert. Es zeigen:
Fig. 1 in einer schematischen Darstellung eine Anlage zur Herstellung von Zementklinker aus Zementrohmehl;
Fig. 2 im Detail ein Ausführungsbeispiel des Kalzinator der Anlage von Fig. 1;
Fig. 3 den Kalzinator im Schnitt nach A-A von Fig. 2;
Fig. 4 den Kalzinator im Schnitt nach B-B von Fig. 2;
Fig. 5 den Kalzinator im Schnitt nach C-C von Fig. 2;
Fig. 6 ein Ausführungsbeispiel eines erfindungsgemäßen Kalzinators mit Einengungen und
Fig. 7 die Kombination eines erfindungsgemäßen Behälter-Kalzinators mit einem Rohr-Kalzinator.

### Weg(e) zur Ausführung der Erfindung

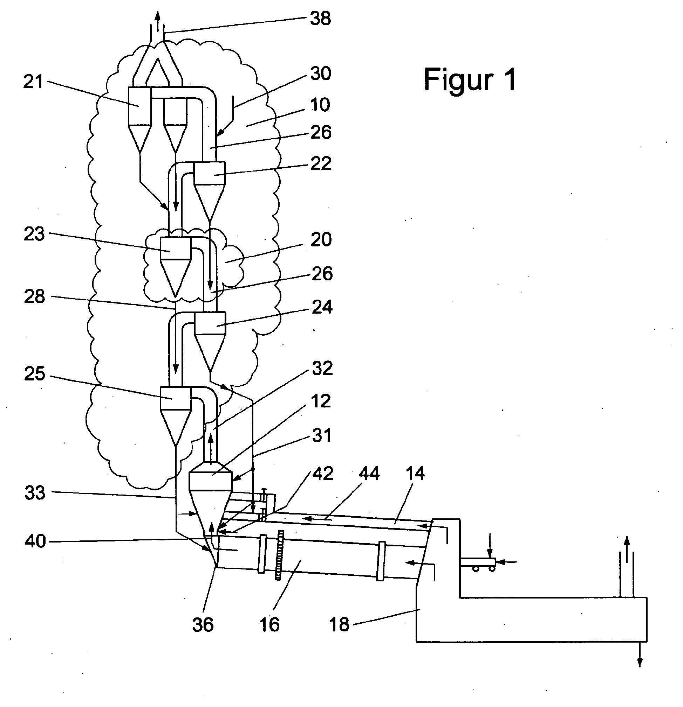

Fig. 1 zeigt schematisch eine Anlage zur Herstellung von Zementklinker aus Zementrohmehl im Trockenverfahren. Die Anlage weist einen Zyklonvorwärmer 10, einen Kalzinator 12 mit Tertiärluftleitung 14, einen Drehofen 16 und einen Klinkerkühler 18 auf.

Der Zyklonvorwärmer 10 setzt sich aus fünf Zyklonstufen 21, 22, 23, 24 und 25 zusammen, die in einem Strang angeordnet sind. Jede Zyklonstufe 21 - 25 besteht aus einem Zyklon 20 mit innerem Tauchrohr, dem vorgeschalteten Steigrohr 26 mit Mehlaufgabekasten und der dem Zyklon nachgeschalteten Mehlleitung 28 mit Pendelklappe. Das Zementrohmehl 30 wird dem Steigrohr 26 der obersten Zyklonstufe 21 aufgegeben, durchwandert die oberste Zyklonstufe 21 und nacheinander die drei folgenden Zyklonstufen 22, 23, 24 und wird als heißes Rohmehl 31 dem Kalzinator 12 aufgegeben. Das im Kalzinator 12 weitgehend entsäuerte Rohmehl wird durch das Kalzinator-Abgas 32 aus dem Kalzinator 12 ausgetragen und in der untersten, fünften Zyklonstufe 25 als Heißmehl 33 abgeschieden und durch eine Ofeneinlaufkammer 36 dem Drehofen 16 zugeführt. Das Kalzinatorabgas 32 strömt von unten nach oben durch die einzelnen Zyklonstufen 25 - 21, kühlt durch den Wärmeaustausch mit dem Rohmehl ab und verlässt als Vorwärmerabgas 38 den Zyklonvorwärmer 10. Durch den Kalzinator 12 wird als Gasphase gleichzeitig das Abgas 40 des Drehofens 16, durch die Verbrennung des Kalzinatorbrennstoffes 42 mittels Heißluft (= Tertiärluft 44) des Klinkerkühlers 18 entstandenes Rauchgas und durch die Entsäuerung erzeugtes CO₂ -Gas hindurch gesaugt. Als Feststoffphase wird das heiße Rohmehl 31 zugeführt, das in der vierten, vorletzten Zyklonstufe 24 abgeschieden wurde. Das heiße Rohmehl 31 wird durch eine Rohmehlweiche 46 auf zwei Zuführungsleitungen 47 und 48 verteilt und in den Kalzinator 12 geleitet. Der in den Kalzinator 12 zugeführte Brennstoff 42 kann fest, flüssig und/oder gasförmig sein. Im dargestellten Ausführungsbeispiel ist er Kohlenstaub. Das Abgas 32 des Kalzinators 12 wird dem Zyklon Vorwärmer 10 an der untersten Zyklonstufe 25 zugeführt, und das dort abgeschiedene Heißmehl 33 wird dem Drehofen 16 durch die Ofeneinlaufkammer 36 zugeführt und in dem Drehofen 16 gesintert.

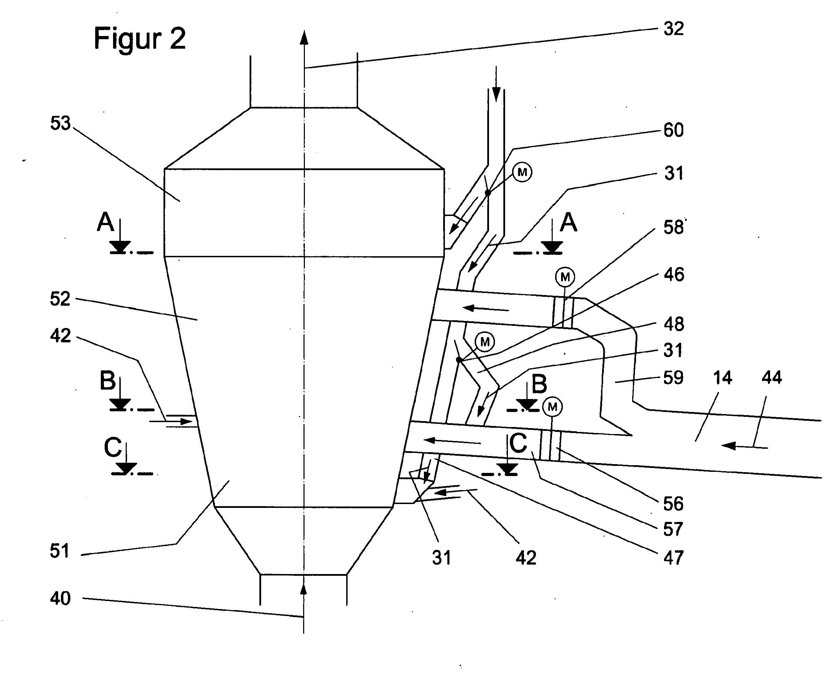

Wie Fig. 2 zeigt, besteht der Kalzinator 12 von der Form her betrachtet aus drei Teilen. Der untere Teil ist ein sich nach oben spitz öffnender Konus, wobei der Konuswinkel zunächst sehr groß und dann klein ist, der mittlere Teil ist zylindrisch und der obere Teil ist ein sich nach oben stumpf verjüngender Konus. Der untere, spitz-konische Teil hat etwa die drei- bis vierfache vertikale Erstreckung der mittlere, zylindrische und der obere, stumpf-konische Teil. Das untere Ende des Kalzinators 12 beginnt an der Gutsperre oberhalb der Ofeneinlaufkanmer 36 des Drehofens 16, und am oberen Ende ist die Abgasleitung 37 des Kalzinators 12 angesetzt, die im untersten Zyklon 25 des Zyklonvorwärmers 10 endet. Das Länge/Durchmesser-Verhältnis des Behälter-Kalzinators 12 beträgt etwa 2:1.

Der Kalzinator 12 ist in drei übereinander angeordnete Reaktionszonen 51, 52, 53 unterteilt, wobei die drei Reaktionszonen etwa die gleiche vertikale Erstreckung haben, und sich die untere und die mittlere Reaktionszone 51, 52 jeweils über etwa das untere bis mittlere bzw. obere Drittel des unteren, spitz-konischen Teils erstrecken und die obere Reaktionszone 53 etwa den zylindrischen und den stumpf-konischen Teil des Kalzinators 12 einnimmt.

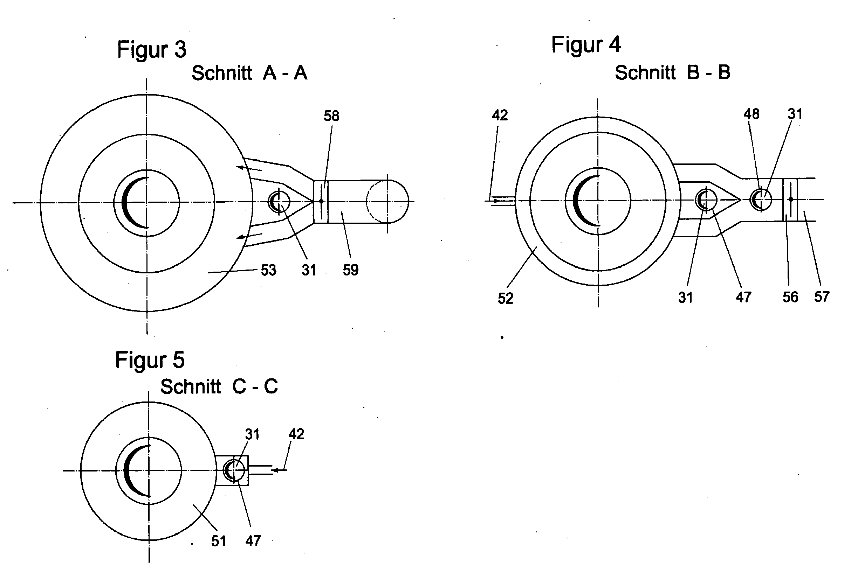

Am unteren Ende der unteren Reaktionszone 51 und der mittleren Reaktionszone 52 wird jeweils Brennstoff 42 aufgegeben. Der Brennstoff 42 ist Kohlenstaub und wird mittels Förderluft aufgegeben. Die vom Klinkerkühler 18 zugeführte Teitiärluftleitung 14 wird in eine untere und eine obere Zweigleitung 57, 59 aufgeteilt, und ein Teil der Tertiärluft 44 wird über die untere Zweigleitung 57 und einen unteren Regulierschieber 56 am unteren Ende der mittleren Reaktionszone 52 zugeführt, während der andere Teil über die obere Zweigleitung 59 und einen oberen Regulierschieber 58 am unteren Ende der oberen Reaktionszone 53 zugeführt wird. Beide Tertiärluftzweigleitungen 57, 59 sind nach den Regulierschiebern 56, 58 gegabelt (Fig. 3 und 4), so dass jeder Tertiärluftanteil durch zwei Öffnungen in den Kalzinator 12 strömt, und eine gute Verteilung der Tertiärluft über die entsprechenden Kalzinatorquerschnitte erreicht wird. Das von der vorletzten Zyklonstufe 24 zugeführte Rohmehl 31 wird - wie bereits erwähnt - in der Rohmehlweiche 46 aufgeteilt. Die untere Zuführungsleitung 47 mündet an unteren Ende der unteren Reaktionszone 51 (Fig. 5), während die obere Zuführungsleitung 48 nach dem unteren Regulierschieber 56 in die dortige Tertiärluftzweigleitung 57 mündet (Fig. 4). Vor der Rohmehlweiche 46 befindet sich noch eine Anfahrweiche 60, über die beim Anfahren des Prozesses das gesamte Rohmehl an der oberen Reaktionszone 53 aufgegeben werden kann.

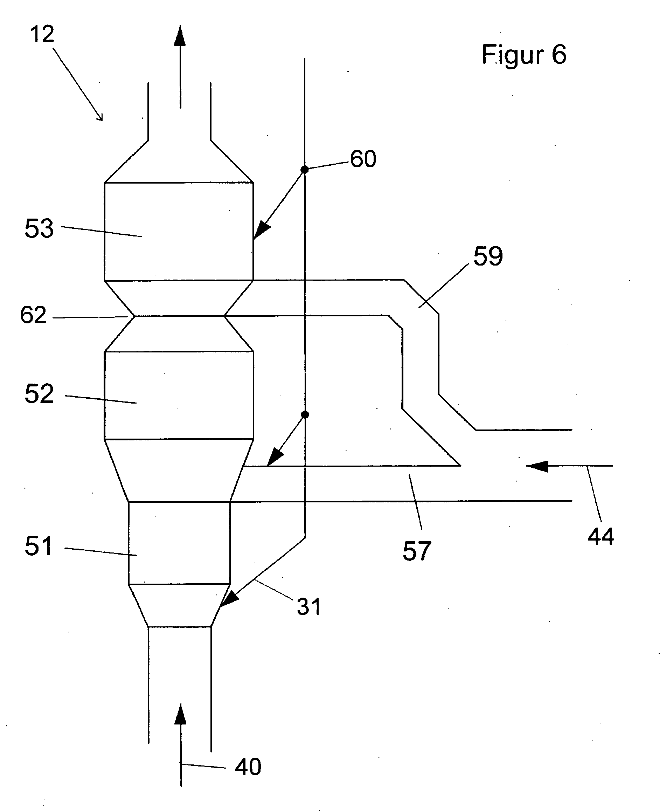

Fig. 6 zeigt einen Behälter-Kalzinator 12 mit einer Einengung 62 zwischen der mittleren Reaktionszone 52 und der oberen Reaktionszone 53. Durch eine solche Einengung 62 werden die Reaktionszonen stärker getrennt, wodurch sich der Ablauf der Verbrennung präziser steuern lässt. Die Zuführung des Brennstoffs, des Rohmehls und der Tertiärluft erfolgt in der gleichen Weise wie bei dem Ausführungsbeispiel der Fig. 2 bis 5 und ist in Fig. 6 nur angedeutet.

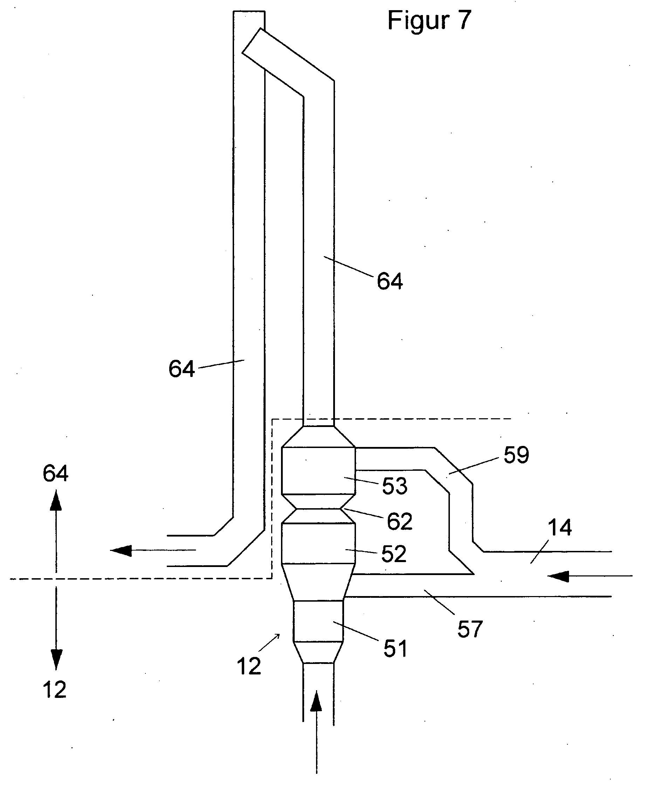

Gemäß Fig. 7 kann dem erfindungsgemäßen Behälter-Kalzinator 12 ein Rohr-Kalzinator 64 nachgeschaltet sein. Durch den nachgeschalteten Rohr-Kalzinator wird die Verweilzeit im Kalzinatorsystem insgesamt erhöht, was beim Einsatz träger Brennstoffe, z. B. Ersatzbrennstoffen, von Vorteil ist. Die Zuführung des Brennstoffs, des Rohmehls und der Tertiärluft erfolgt so wie in dem Ausführungsbeispiel der Fig. 2 bis 5 und ist in Fig. 7 nur angedeutet. Das Längen/Durchmesser-Verhältnis liegt im Bereich von etwa 3:1 bis etwa 4:1 1 und beträgt insbesondere 3,5:1.

Liste der Bezugszeichen
10 Zyklonvorwärmer
12 Kalzinator
14 Tertiärluftleitung
16 Drehofen
18 Klinkerkühler
20 Zyklon
21-25 Zyklonstufe
26 Steigrohr
28 Mehlleitung
30 Rohmehl
31 heißes Rohmehl
32 Kalzinatorabgas
33 Heißmehl
36 Ofeneinlaufkammer
38 Vorwärmerabgas
40 Abgas (Drehofen)
42 Brennstoff
44 Tertiärluft
46 Rohmehlweiche
47 untere Zuführungsleitung
48 obere Zuführungsleitung
51 untere Reaktionszone
52 mittlere Reaktionszone
53 obere Reaktionszone
56 unterer Regulierschieber
57 untere Zweigleitung
58 oberer Regulierschieber
59 obere Zweigleitung
60 Anfahrweiche
62 Einengung
64 Rohr-Kalzinator

## Patentansprüche

1. Behälter-Kalzinator (12) zum Vorkalzinieren von Rohmehl (31) bei der Herstellung von Zementklinker, wobei der Behälter-Kalzinator (12) ein Behälter ist, in den unten die Abgasleitung eines Drehofens (16) mündet und oben die Kalzinator-Abgasleitung wegführt, wobei das Länge/Durchmesser-Verhältnis etwa 2:1 beträgt und, wenn ein Rohr-Kalzinator (64) nachgeschaltet ist, im Bereich von 3:1 bis 4:1 liegt und wobei Einrichtungen für die Zuführung von Rohmehl, Brennstoff und Tertiärluft vorgesehen sind, **dadurch gekennzeichnet,**
- **dass** der Brennraum des Kalzinators (12) in vertikaler Richtung in eine untere Reaktionszone (51), eine mittlere Reaktionszone (52) und eine obere Reaktionszone (53) unterteilt ist, die übereinander angeordnet sind,
- **dass** am unteren Ende der unteren Reaktionszone (51) eine Einrichtung zur Aufgabe eines ersten Teils des Brennstoffs (42) und eines ersten Teils des Rohmehls (31) vorgesehen ist,
- **dass** am unteren Ende der mittleren Reaktionszone (52) eine Einrichtung zur Aufgabe eines zweiten Teils des Brennstoffs (42) und eine Einrichtung zur Aufgabe eines zweiten Teils des Rohmehls (31) sowie zur Zuführung eines ersten Teils der Tertiärluft (44) vorgesehen ist und
- **dass** am unteren Ende der oberen Reaktionszone (53) eine Einrichtung zur Zuführung eines zweiten Teils der Tertiärluft (44) vorgesehen ist.

2. Kalzinator nach Anspruch 1, wobei jede Tertiärluftmenge durch zwei oder mehrere Anschlussöffnungen in den Kalzinator strömt.

3. Kalzinator nach Anspruch 1 oder 2, wobei sich der Behälter ausgehend von der Abgasleitung des Drehofens (16) von unten nach oben unter einem spitzen Winkel konisch erweitert und oben unter einem stumpfen Winkel zur Abgasleitung des Kalzinators (12) hin verjüngt.

4. Kalzinator nach Anspruch 1, 2 oder 3, wobei der zweite Teil des Rohmehls (31) dem ersten Teil der Tertiärluft (44) aufgegeben wird, bevor diese in den Behälter eintritt.

5. Kalzinator nach einem der Ansprüche 1 bis 4, mit einer oder mehreren Einengungen (62) zur Trennung der Reaktionszonen (51, 52, 53).

6. Verwendung des Behälter-Kalzinators (12) nach einem der Ansprüche 1 bis 5, **dadurch gekennzeichnet,**
- **dass** der erste Teil des Brennstoffs (42) mittels des Drehofenabgases (40) in der unteren Reaktionszone (51) unterstöchiometrisch verbrannt wird, wobei das Rohmehl (31) teilkalziniert wird,
- **dass** der erste Teil der Tertiärluft (44) so bemessen ist, dass der zweite Teil des Brennstoffes (42) in der mittleren Reaktionszone (52) wiederum unterstöchiometrisch verbrannt wird, wobei eine weitere Teilkalzinierung des Rohmehls (31) erfolgt,
- **dass** in der oberen Reaktionszone (53) die unverbrannten oder nur teilweise verbrannten Bestandteile mittels des zweiten Teils der Tertiärluft (44) über-stöchiometrisch verbrannt werden.

7. Verwendung nach Anspruch 6, wobei alle Verbrennungsprozesse im Kalzinator (12) bei niedrigen Temperaturen ablaufen.

## Claims

1. Container-calciner (12) for precalcining raw meal (31) during the production of cement clinker, wherein the container-calciner (12) is a container into which the waste-gas pipe of a rotary furnace (16) opens out at the bottom and the calciner waste-gas pipe leads away at the top, wherein the length/diameter ratio is approximately 2:1 and, if a tube calciner (64) is connected downstream, lies in the range of from 3:1 to 4:1 and wherein equipment is provided for conveying raw meal, fuel and tertiary air, **characterized**
- **in that** the combustion space of the calciner (12) is divided vertically into a lower reaction zone (51), a middle reaction zone (52) and an upper reaction zone (53), which are arranged one above the other,
- **in that** at the bottom end of the lower reaction zone (51) equipment is provided for feeding a first portion of the fuel (42) and a first portion of the raw meal (31),
- **in that** at the bottom end of the middle reaction zone (52) equipment is provided for feeding a second portion of the fuel (42) and equipment is provided for feeding a second portion of the raw meal (31) as well as for conveying a first portion of the tertiary air (44) and
- **in that** at the bottom end of the upper reaction zone (53) equipment is provided for conveying a second portion of the tertiary air (44).

2. Calciner according to claim 1, wherein every quantity of tertiary air flows into the calciner through two or more connection openings.

3. Calciner according to claim 1 or 2, wherein, starting from the waste-gas pipe of the rotary furnace (16), the container widens conically from the bottom to the top at an acute angle and tapers at the top towards the waste-gas pipe of the calciner (12) at an obtuse angle.

4. Calciner according to claim 1, 2 or 3, wherein the second portion of the raw meal (31) is fed to the first portion of the tertiary air (44) before the latter enters the container.

5. Calciner according to one of claims 1 to 4, with one or more constrictions (62) for separating the reaction zones (51, 52, 53).

6. Use of the container-calciner (12) according to one of claims 1 to 5, **characterized**
- **in that** the first portion of the fuel (42) is combusted substoichiometrically by means of the rotary furnace waste gas (40) in the lower reaction zone (51), wherein the raw meal (31) is partially calcined,
- **in that** the first portion of the tertiary air (44) is measured such that the second portion of the fuel (42) is again combusted substoichiometrically in the middle reaction zone (52), wherein a further partial calcining of the raw meal (31) takes place,
- **in that** in the upper reaction zone (53) the uncombusted or only partially combusted constituents are combusted hyperstoichiometrically by means of the second portion of the tertiary air (44).

7. Use according to claim 6, wherein all combustion processes in the calciner (12) take place at low temperatures.

## Revendications

1. Calcinateur à réservoir (12) pour la pré-calcination d'agrégat brut (31) lors de la production de clinker de ciment, où le calcinateur à réservoir (12) est un conteneur dans la partie inférieure duquel débouche la tuyauterie d'échappement d'un four rotatif (16) et dont sort en sa partie supérieure la tuyauterie d'échappement du calcinateur, où le rapport longueur/diamètre représente environ 2 : 1 et se trouve dans la région de 3 : 1 à 4 : 1 lorsqu'un tuyau-calcinateur (64) est monté en aval, et où sont prévus des dispositifs d'alimentation en agrégat brut, combustible et air tertiaire, **caractérisé en ce que**
- la chambre de combustion du calcinateur (12) est subdivisée dans le sens vertical en une zone de réaction inférieure (51), une zone de réaction médiane (52) et une zone de réaction supérieure (53) qui sont superposées l'une sur l'autre,
- est prévu au fond de la zone de réaction inférieure (51) un dispositif de décharge d'une première partie du combustible (42) et une première partie de l'agrégat brut (31),
- est prévu au fond de la zone de réaction médiane (52) un dispositif de décharge d'une deuxième partie du combustible (42) et un dispositif de décharge d'une deuxième partie de l'agrégat brut (31) ainsi que d'alimentation d'une première partie du flux d'air tertiaire (44) et
- est prévu au fond de la zone de réaction supérieure (53) un dispositif d'alimentation d'une deuxième partie du flux d'air tertiaire (44).

2. Calcinateur selon la revendication 1, où toute quantité d'air tertiaire coule dans le calcinateur à travers deux ou plusieurs orifices de raccordement.

3. Calcinateur selon la revendication 1 ou 2, où le conteneur s'élargit de bas en haut à partir de la tuyauterie d'échappement du four rotatif (16) selon une forme conique à angle aigu et se rétrécit en haut selon un angle obtus vers la tuyauterie d'échappement du calcinateur (12).

4. Calcinateur selon la revendication 1, 2 ou 3, où la deuxième partie de l'agrégat brut (31) est déversée dans la première partie du flux d'air tertiaire (44) avant l'introduction de celui-ci dans le conteneur.

5. Calcinateur selon une des revendications 1 à 4, comportant un ou plusieurs rétrécissements (62) destinés à séparer les zones de réaction (51, 52, 53).

6. Utilisation du calcinateur à réservoir (12) selon une des revendications 1 à 5, **caractérisée en ce que**
- la première partie du combustible (42) est incinérée selon un taux sous-stoechiométrique au moyen du gaz d'échappement du four rotatif (40) dans la zone de réaction inférieure (51), où l'agrégat brut (31) est partiellement calciné,
- la première partie du flux d'air tertiaire (44) est mesurée de sorte que la deuxième partie du combustible (42) est encore une fois incinérée selon un taux sous-stoechiométrique dans la zone de réaction médiane (52), entraînant une calcination partielle supplémentaire de l'agrégat brut (31),
- dans la zone de réaction supérieure (53) les composés non incinérés ou uniquement partiellement incinérés sont incinérés selon un taux sur-stoechiométrique au moyen de la deuxième partie du flux d'air tertiaire (44).

7. Utilisation selon la revendication 6, où tous les processus de combustion s'effectuent à faibles températures dans le calcinateur (12).
